Europäisches Patentamt

European Patent Office

Office européen des brevets

(11) Publication number: **0 057 504**
**B1**

(12) **EUROPEAN PATENT SPECIFICATION**

(45) Date of publication of patent specification: **09.10.85**

(21) Application number: **82300134.2**

(22) Date of filing: **12.01.82**

(51) Int. Cl.⁴: **B 65 D 1/02,** B 29 C 71/02,
B 29 C 49/08

(54) Container of polyethylene terephthalate or saturated polyester resin.

(30) Priority: **29.01.81 JP 11949/81 U**

(43) Date of publication of application:
**11.08.82 Bulletin 82/32**

(45) Publication of the grant of the patent:
**09.10.85 Bulletin 85/41**

(84) Designated Contracting States:
**CH DE FR GB IT LI NL**

(56) References cited:
**DE-A-2 926 044**
**GB-A-2 024 087**
**GB-A-2 074 932**
**US-A-3 480 168**

(73) Proprietor: Yoshino Kogyosho CO., LTD.
No. 2-6, Ojima 3-chome, Koto-ku
Tokyo 136 (JP)

(72) Inventor: Tsukada, Takami
No. 684-35, Ooanacho
Funabashi-Shi Chiba-Ken (JP)
Inventor: Ota, Akiho
No. 3-2-6, Ojima
Koto-Ku Tokyo (JP)
Inventor: Sugiura, Hiroaki
No. 3-2-6, Ojima
Koto-Ku Tokyo (JP)

(74) Representative: Heath, Derek James et al
Bromhead & Co. 30 Cursitor Street Chancery
Lane
London EC4A 1LT (GB)

Courier Press, Leamington Spa, England.

## Description

The present invention relates to a bottle-shaped container of polyethylene terephthalate or a saturated polyester resin having a thermoset body part thinned by biaxial orientation and a neck of thicker cross-section with the upper part of the neck being crystallised.

Saturated polyester resin has a wide range of applications as the material of containers such as bottles and the like, because it has excellent physical properties. For example, it provides a good gas barrier.

A conventional bottle-shaped container of biaxially oriented saturated polyester resin has increased strength by virtue of the biaxial orientation. The fact that the container walls can thereby be made thinner also saves on the quantity of material needed. Furthermore the resin does not ooze out any detrimental substance such as solvent, and does not produce toxic gas when it is incinerated. Such a bottle-shaped container is formed, for convenience of moulding with biaxial orientation, with increased thickness only at the neck section and shoulder, body and bottom sections. In the biaxial orientation blow moulding, the thermal deformation temperature is extremely low. When liquid such as juice or milk which is at a high temperature, to effect heat-sterilization, is poured into the container, the latter is thermally shrinked so that an error may occur in the final liquid content within the container. Therefore, it is desirable to subject the container to heat treatment simultaneously with or after its formation so as to increase the thermal deformation temperature of the biaxially oriented sections of the container.

It is also desirable to carry out such heat treatment so that deterioration in the dimensional accuracy caused by the high temperature is prevented, the occurrence of chatter is prevented, and the capping accuracy is improved by increasing the surface hardness, and to strengthen the thick neck section which is not biaxially oriented.

Because the neck section of a conventional container is not biaxially oriented in the blow moulding, the resultant container may have unstable physical properties and may be susceptible to thermal deformation. However, the containers may have to be sealed very tightly according to their contents. Therefore, the neck section or end of such a container is usually sealed or caulked by a crown cap thereon, or it is sealed with a cap with the interposition of a packing. However, if the neck section is deformed by some external factors such as heat, the aforementioned sealing effect of the sealing means may be diminished.

A conventional container of polyethylene terephthalate resin is particularly heat treated by a so-called thermal setting at a temperature exceeding the softening point of the polyethylene terephthalate resin, after it is blow-moulded. This improves the thermal resistance of the resin. Though the container body may be subjected to a small thermal deformation, it is important that the neck section of the container is not subject even to a small deformation for the reasons already given.

Polyethylene terephthalate resin may be transparent. This sometimes deteriorates its physical properties and qualities because of the effects of external light. Improvement may be required here to protect the content of the container against external light.

One prior construction of container having the features set out on the opening paragraph of this present specification is described in our GB—A—2 074 932. In this construction, substantially the whole of the neck portion is crystallized, and has a substantially uniform increased thickness. This results in the thicker neck being brittle and comprising too much material.

An aim of the present invention is to provide a container having the construction set out in the opening paragraph of the present specification, in which the neck section is less brittle, in which the thick neck section can be efficiently and effectively heat treated, the material of the neck section is reduced, and further the heat treated state of the neck section is evident from its external appearance with an excellent colour.

Accordingly, the present invention is characterised in that:

(a) the upper part of the neck is, throughout its height, thicker and larger in outer diameter than an intermediate uncrystallised part of the neck;

(b) an upper half part of the crystallised upper part is thicker and larger in outer diameter than a lower half part of the upper part; and

(c) the neck is stepped between the upper half part and the lower half part of the neck part, and also between the lower half part and the intermediate part of the neck.

Preferably, an annular, outwardly-projecting, reinforcing flange is integrally formed on the outer surface of the lowermost part of the neck where it meets a shoulder part of the container.

Thus the upper part of the neck section is thickly strengthened and the lower half part of the upper part of the neck section is formed thinner to reduce the quantity of the material thereof.

The increase in thickness of the upper half part may ensure the diameter required for a secure and exact mounting of a cap thereon.

The heat treatment of the neck part is made evident by the crystallising and different colour in relation to the non-crystallised part thereof. The excellent coloured appearance obtained also enhances the value of the container as a consumer commodity.

The neck section of the container may be rigidly formed with stable physical properties.

The contents of the container can be effectively shielded from external light.

The container may be made so that the neck section is not thermally affected or deformed. Further, the container may be made so that its neck section does not vary in size, that is to say the neck section may be made with high accuracy.

The thick neck section may be densely coloured as compared with the other sections such as body, shoulder and bottom sections with a preferably contrast in external appearance, as if the neck section is a different article mounted decoratively on the top of the container.

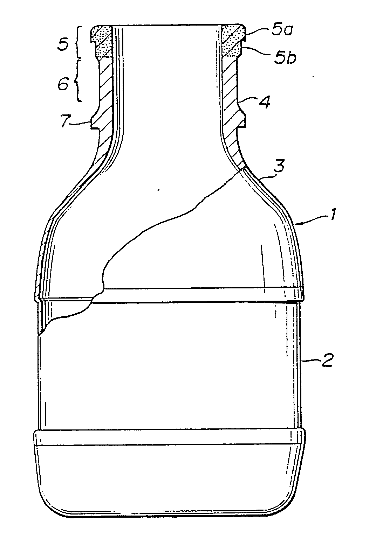

An example of a container made in accordance with the present invention is illustrated in the accompanying drawing, which shows an elevational side view, partly in cross section, of the container.

Referring now to the Figure, a hollow blow-moulded bottle-shaped container 1 of a biaxially oriented saturated polyester resin comprises a body 2, a neck 4, and a shoulder 3.

The neck 4 of the container 1 is formed much thicker than the body, because the neck section of a preformed parison is held in a mould and high pressure air is blown into the parison while longitudinally orienting the parison to biaxially orient the parison into the blow-moulded bottle-shaped container. The neck section of the parison held by the mould is not oriented, and hence remains relatively thick.

The upper part 5 of the neck 4 of the container 1 is so formed as to be thicker and larger in outer diameter than an intermediate section 6 of the neck 4 and an upper half part 5a of the upper part 5 is formed thicker and larger in outer diameter than a lower half part 5b of the upper part 5. The neck is stepped between the upper half part and the lower half part of the upper part and also between the lower half part of the upper part and the intermediate part. It is noted that the thickness of the upper half part of the upper part has a thickness sufficient for the strength required in a capping process of the next section, the lower half part is less thick than the upper half part of the upper part, and the intermediate part is less thick than the lower half part of the upper part. It is preferred to form a reinforcing projecting strip or flange 7 peripherally on the lower outer surface of the neck section of the container.

Then, the upper part comprising the upper half part and the lower half part of the neck 4 of the container 1 is crystallised. The crystallisation is performed by heating it higher than a glass transition temperature and gradually cooling it. In order to crystallise the upper part of the neck section of the container selectively, a heat shielding plate is wound around the neck section except at its upper part, and the plate is removed after it is heated. The upper part of the neck section of the container is thereby altered in colour due to the crystallisation. For example, where the bottle-shaped container is colourless and transparent, the crystallised part becomes white like milk, and where it is coloured and transparent, the crystallised part becomes opaque with the colour of the container made fainter.

It should be understood from the foregoing description that since only the upper part of the neck 4 of the container is thickened and the upper half part of the upper part of the neck section is further thickened relative to the lower half part of the upper part, the upper end of the neck 4 of the container 1 is strengthened and the lower half part of the upper end of the neck section is thinner to reduce the quantity of the material thereof. It should also be appreciated that since the upper half part of the neck section is of greater diameter than the lower half part of the upper part of the neck, a precision mount for a closure cap is provided.

When the preformed parison is moulded, a predetermined pigment may be added to the material so that the container body 1, after blow-moulding, is coloured, and is either transparent or opaque. This reduces the transmission of external light into the container 1, and protects the contents thereof.

The polyethylene terephthalate resin of the neck 4 is physically and rigidly stabilized by the crystallisation with substantially no thermal deformation, and it is hardly affected by further heat treatment such as the thermal setting step after the container of the polyethylene terephthalate resin has been blow-moulded.

When the preformed parison is biaxially blow-moulded, the neck 4 is not oriented. It is therefore susceptible to crystallisation and accordingly readily becomes brittle due to the crystallisation, but since the neck section is thickened, it is firmly strengthened.

## Claims

1. A bottle-shaped container (1) of polyethylene terephthalate or a saturated polyester resin having a thermoset body part (2) thinned by biaxial orientation and a neck (4) of thicker cross-section with the upper part (5) of the neck being crystallised, characterised in that:

(a) the upper part (5) of the neck (4) is, throughout its height, thicker and larger in outer diameter than an intermediate uncrystallised part (6) of the neck (4);

(b) an upper half part (5a) of the crystallised upper part (5) is thicker and larger in outer diameter than a lower half part (5b) of the upper part (5); and

(c) the neck (4) is stepped between the upper half part (5a) and the lower half part (5b) of the neck part (5), and also between the lower half part (5b) and the intermediate part (6) of the neck (4).

2. A bottle-shaped container according to claim 1, characterised in that an annular, outwardly-projecting, reinforcing flange (7) is integrally formed on the outer surface of the lowermost part of the neck (4) where it meets a shoulder part (3) of the container.

## Revendications

1. Recipient (1) en forme de bouteille en téréphtalate de polyéthylène ou en une résine du type polyester saturé comportant une partie de corps thermodurcie (2), amincie par une orientation biaxiale, et une col (4) de section plus épaisse, la partie supérieure (5) du col étant cristallisée, caractérisé en ce que:

(a) la partie supérieure (5) du col (4) est, sur sa hauteur, plus épaisse et plus grande, diamètre extérieur, qu'une partie intermédiare non cristallisée (6) du col (4);

(b) une moitié supérieure (5a) de la partie supérieure cristallisée (5) est plus épaisse et plus grande, en diamètre extérieur, qu'une moitié inférieure (5b) de la partie supérieure (5); et

(c) le col (4) est épaulé la moitié supérieure (5a) et la moitié inférieure (5b) de la partie (5) du col, et également entre la moitié inférieure (5b) et la partie intermédiaire (6) du col (4).

2. Récipient en forme de bouteille selon la revendication 1, caractérisé en ce qu'un rebord annulaire (7) de renfort, faisant saillie vers l'extérieur, est réalisé d'une seule pièce sur la surface extérieure de la partie inférieure du col (4) où il rejoint une partie d'épaule (3) du récipient.

**Patentansprüche**

1. Flaschenförmiger Behälter (1) aus Polyäthylen-Terephthalat oder gesättigtem Polyesterharz mit einem durch biaxiales Orientieren gedünnten thermogehärteten Körperteil (2) und einem Hals (4) dickeren Querschnitts, wobei der obere Teil (5) des Halses kristallisiert ist, dadurch gekennzeichnet, daß:

(a) der obere Teil (5) des Halses (4) über seine Höhe dicker und im Durchmesser größer ist also ein unkristallisierter Zwischenteil (6) des Halses (4);

(b) ein oberer Halbteil (5a) des kristallisierten oberen Teils (5) dicker und im Durchmesser größer ist als der untere Halbteil (5b) des oberen Teils (5); und

(c) der Hals (4) zwischen dem oberen Halbteil (5a) und dem unteren Halbteil (5b) des Halsteiles (5) abgestuft ist, und ebenso zwischen dem unteren Halbteil (5b) und dem Zwischenteil (6) des Halses (4).

2. Flaschenförmiger Behälter nach Anspruch 1, dadurch gekennzeichnet, daß ein ringförmiger, nach außen vorstehender Verstärkungsflansch (7) an der Außenfläche des untersten Teils des Halses (4) ausgebildet ist, wo dieser auf einen Schulterteil (3) des Behälters trifft.